# EUROPÄISCHE PATENTSCHRIFT

(11) **EP 1 495 523 B1**
(45) Veröffentlichungstag und Bekanntmachung des Hinweises auf die Patenterteilung: **03.12.2008**
(21) Anmeldenummer: 03739366.7
(22) Anmeldetag: 15.02.2003
(51) Int. Cl.: H02H 5/04

(54) **HEIZVORRICHTUNG MIT FLEXIBLEM HEIZKÖRPER**
HEATING DEVICE HAVING A FLEXIBLE HEATING BODY
DISPOSITIF CHAUFFANT A CORPS CHAUFFANT FLEXIBLE

(30) Priorität: 14.03.2002 DE 10211142
(43) Veröffentlichungstag der Anmeldung: 12.01.2005
(73) Patentinhaber: Beurer GmbH & Co., 89077 Ulm (DE)
(72) Erfinder: MERK, Ernst, 89264 Weissenhorn (DE); KÖHLER, Ralf, 89129 Langenau (DE)
(74) Vertreter: Fleck, Hermann-Josef
(86) Internationale Anmeldenummer: PCT/EP2003/001532
(87) Internationale Veröffentlichungsnummer: WO 2003/077397

(56) Entgegenhaltungen:
- EP-A- 0 562 850
- US-A- 4 205 223

## Beschreibung

Die Erfindung bezieht sich auf eine Heizvorrichtung mit einer in einem flexiblen Heizkörper integrierten und über ein Anschlusskabel an eine Versorgungsspannung anschließbaren elektrischen Heizleiteranordnung, die einen ersten Leiter und einen mit diesem in Reihe liegenden und von ihm mit einer Isolation getrennten, benachbarten zweiten Leiter aufweist, einem mit dieser und weiteren Elementen einschließlich einem Steuerglied für einen Heizstrom gebildeten Heizkreis und mit einer zum Beeinflussen des Heizstromes und Regeln der Temperatur an das Steuerglied angeschlossenen Ansteuerschaltung, wobei in dem Heizkreis ein das Steuerglied aufweisender Steuerzweig und ein dazu parallel liegender Parallelzweig gebildet sind und die Isolation eine mit der Temperatur abnehmende Widerstandscharakteristik besitzt.

Eine derartige Heizvorrichtung ist in etwa in der EP 0 562 850 A2 angegeben, wobei es insbesondere um eine Schaltung zum Schutz der in dem flexiblen Heizkörper integrierten elektrischen Heizleiteranordnung vor einer Übertemperatur geht. Des Weiteren weist die dabei vorgesehene Ansteuerschaltung auch eine Temperaturregelschaltung auf, mit der für die Aufrechterhaltung einer gewünschten Temperatur ein Heizstrom über ein Steuerglied in Form eines Thyristors z. B. mittels Phasenanschnittsteuerung variiert wird. Auch andere Ausführungsarten des Steuerglieds, beispielsweise ein mechanischer, thermischer oder anderer elektronischer Schalter sind genannt. Denkbar ist auch eine Ansteuerung mit Pulspaketen.

Eine weitere Heizvorrichtung, beispielsweise Heizdecke, ist in der US-A 4,205,223 angegeben. Auch hierbei ist eine konzentrisch gewickelte Heizkordel mit einem Isolationsmaterial mit negativem Widerstandskoeffizient versehen, um dessen mit der Temperatur abnehmende Impedanz für die Steuerung auszunutzen. Hierbei ist nur ein Leiter als Heizleiter benutzt, während der andere Leiter als Sensorleiter benutzt ist und eine Temperaturüberwachungsschaltung ein Überwachungssignal im Kreis des Sensorleiters abgreift.

Der Erfindung liegt die Aufgabe zugrunde, eine Heizvorrichtung der eingangs genannten Art bereit zu stellen, bei der die Temperaturüberwachung erweitert ist.

Diese Aufgabe wird mit den Merkmalen des Anspruches 1 gelöst. Hiernach ist vorgesehen, dass die Ansteuerschaltung des Weiteren zum Abgreifen eines von der Temperatur der Isolation abhängigen elektrischen Überwachungssignal-Strom oder Spannung über einen Überwachungszweig an einen auf eine Widerstandsveränderung der Isolation ansprechenden Abschnitt des Heizkreises gekoppelt ist, dass die Ansteuerschaltung auf eine Überschreitung einer Schwelle durch das Überwachungssignal anspricht und den Heizstrom durch Ansteuern des Steuerglieds unterbricht und dass in dem Heizkreis ein das Steuerglied aufweisender Steuerzweig und ein dazu parallel liegender Parallelzweig gebildet sind und dass das Überwachungssignal in dem Parallelzweig beispielsweise an einem Parallelzweigwiderstand abgegriffen ist.

Mit diesen Maßnahmen wird bei erhöhter Temperatur die Isolation zwischen dem Innenleiter und dem Außenleiter zunehmend leitend, insbesondere wenn sich lokale Temperaturspitzen (Hot Spots) innerhalb der Heizleiteranordnung des flexiblen Heizkörpers ergeben. Damit wird eine lokal ansprechende Sensorfunktion erreicht, mit der bei einem Wärmeunterbett oder einer Heizdecke die Heizleiteranordnung im Zentimeterbereich überwacht werden kann und die neben einem durch die Heizleiter (z. B. mit einem positiven Temperaturgang des Widerstandes, PTC-Effekt) an sich gebildeten flächenintegrierenden Sensorsystem, wie es bei der Temperaturregeleinrichtung ausgenutzt ist, eingesetzt werden kann. Die Funktionsweise wird mit der Ausbildung der Ansteuerschaltung verbessert.

Die Zuverlässigkeit des Temperaturüberwachungssystems wird noch mit den Maßnahmen gesteigert, dass mittels der Isolation und einer Widerstandsanordnung ein durch eine Parallelzweig-Diodenanordnung nur bei einer Halbwelle einer Versorgungsspannung ansprechender temperaturabhängiger Spannungsteiler gebildet ist, an dem das Überwachungssignal abgegriffen und über den Übernahmezweig einer Bewertungseinheit der Ansteuerschaltung zugeführt ist. Durch diese Ausbildung wird ein sicheres Ansprechen auch bei extremer mechanischer Belastung, wie etwa scharfem Knicken oder dgl. ein sicheres Ansprechen z. B. auf einen Kurzschluss gewährleistet.

Dabei besteht eine vorteilhafte Ausgestaltung darin, dass zwischen dem als Innenleiter ausgebildeten ersten Leiter und dem als Außenleiter ausgebildeten zweiten Leiter in Reihe zu diesen eine Heizleiterdiode angeordnet ist, dass der Abschnitt des Heizkreises als zu einem das Steuerglied aufweisenden Steuerzweig parallel liegender Parallelzweig ausgeführt ist, der eine in Reihe mit einer Widerstandsanordnung liegende Parallelzweig-Diodenanordnung mit mindestens einer in Gegenrichtung zu der Durchlassrichtung der Heizleiterdiode angeordneten Parallelzweigdiode aufweist, und dass der Steuerzweig mindestens ein in Durchlassrichtung der Heizleiterdiode geschaltetes Bauelement aufweist.

Um dabei die Sicherheit zu erhöhen, kann vorgesehen sein, dass zwei Parallelzweigdioden zueinander parallel geschaltet sind und die Widerstandsanordnung zwei zueinander parallel geschaltete, gegen Masse geführte Parallelzweig-Widerstände umfasst.

Eine ergänzende Sicherheitsmaßnahme besteht darin, dass in thermischer Wirkverbindung mit der Widerstandsanordnung eine Temperatursicherung vorgesehen ist.

Eine für die Auswertung vorteilhafte Ausgestaltung besteht darin, dass das Überwachungssignal über den Überwachungszweig an einen Eingang einer digitalen Schaltungsanordnung der Ansteuerschaltung gelegt ist, die die Bewertungseinheit aufweist.

Für den Abgriff des Überwachungssignals ist vorteilhaft vorgesehen, dass das Überwachungssignal mittels eines in dem Überwachungszweig angeordneten weiteren Spannungsteilers mit Überwachungszweig-Widerständen an den Eingang gelegt ist.

Der Aufbau in Verbindung mit dem Temperaturüberwachungssystem wird dadurch begünstigt, dass die Ansteuerschaltung des Weiteren zum Abgreifen einer von der Temperatur der Isolation abhängigen elektrischen Messgröße - Strom oder Spannung - über einen Koppelzweig an den Heizkreis gekoppelt ist und dass die Ansteuerschaltung derart ausgebildet ist, dass die Ansteuerung des Steuerglieds zum Einregeln einer eingestellten Temperatur des Heizkörpers ausgebildet ist.

Für den Aufbau und die Auswertung sind dabei die Maßnahmen vorteilhaft, dass die Messgröße mittels eines im Heizkreis gebildeten Spannungsteilers abgegriffen ist, der einerseits mit der einen temperaturabhängigen Widerstand bildenden Heizleiteranordnung und andererseits mit mindestens einem Widerstandselement gebildet ist, dass die Messgröße über den Koppelzweig einem einer Digitalstufe vorgeschalteten analogen Zeitglied mit einer Widerstands-/Kondensatorschaltung zugeführt ist, dass die Digitalsierstufe zum Bilden eines digitalen Istwertes ein Zeitmessglied aufweist und der digitale Istwert einem Istzeitwert bis zum Erreichen einer vogegebenen oder vorgebbaren Ladespannung des Kondensators entspricht, dass in der Digitalstufe als Sollwert ein Sollzeitwert vorgegeben oder vorgebbar ist und dass zum Heizen die Ansteuerung des Steuerglieds in Abhängigkeit von einer Abweichung des Istzeitwertes von dem Sollzeitwert erfolgt.

Die sichere Funktionsweise wird weiterhin dadurch unterstützt, dass die Ansteuerschaltung eine Sicherheitsschaltung mit einer Fehlersensoreinrichtung aufweist und dass in dem Heizkreis ein über die Sicherheitsschaltung ansteuerbares zusätzliches Steuerglied in Reihe zu dem Steuerglied angeordnet ist, wobei die Sicherheitsschaltung auf einen Fehler der Ansteuerschaltung anspricht und den Heizstrom durch Ansteuerung des zusätzlichen Steuerglieds unterbricht.

Vorteilhafte weitere Ausgestaltungen der Erfindung bestehen darin, dass in dem Heizkreis auf dem Heizkörper oder außerhalb desselben eine Schmelzsicherung angeordnet ist, darin, dass die Heizleiteranordnung nur zwei aus dem Heizkörper herausgeführte Heizleiterenden aufweist, die an Anschlusspunkten mit einer zweiadrigen Anschlussleitung direkt über eine 2-polige Stecker/Kupplungseinheit oder eine Hot Lead-Verbindung verbunden ist, darin, dass die Anschlusspunkte innerhalb eines Schnurzwischenschaltgehäuses liegen, sowie darin, dass eine auf das Überwachungssignal ansprechende, optische und/oder akustische Anzeigeeinheit vorgesehen ist.

Die Erfindung wird nachfolgend anhand von Ausführungsbeispielen unter Bezugnahme auf die Zeichnungen näher erläutert. Es zeigen:
- Fig. 1: eine schematische Darstellung eines ersten Ausführungsbeispiels für eine elektrische Schaltung einer Heizvorrichtung,
- Fig. 2: ein weiteres Ausführungsbeispiel für die elektrische Schaltung, und
- Fig. 3: Spannungsverläufe eines Zeitglieds der elektrischen Schaltung, aufgetragen über der Zeit zum Herleiten eines Istwertes, Sollwertes und Referenzwertes.

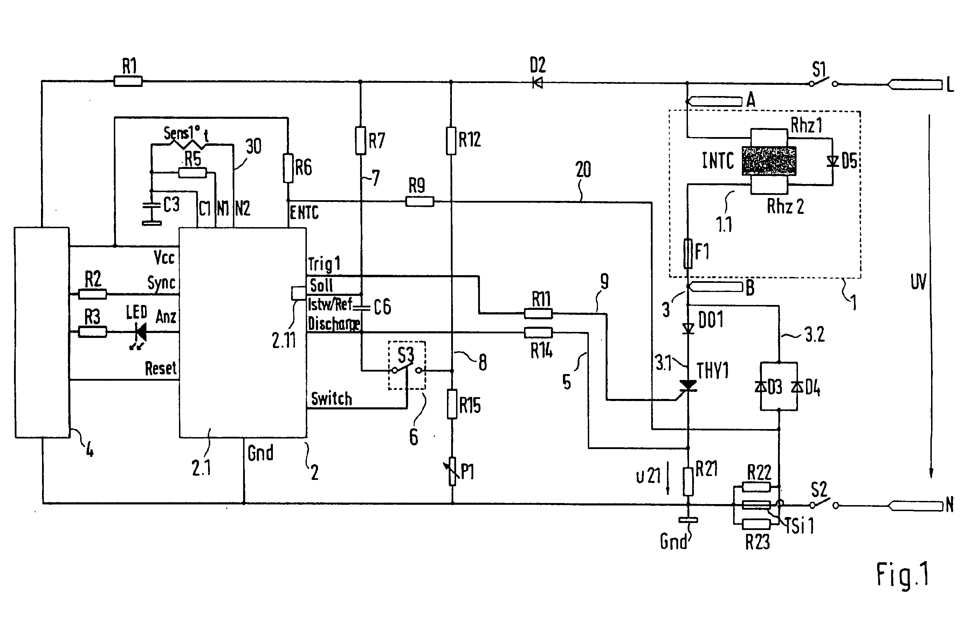

In Fig. 1 ist eine Heizvorrichtung mit einem flexiblen Heizkörper 1 gezeigt, z.B. in Form einer Heizdecke, eines Heizkissens oder Wärmeunterbetts, in dem eine Heizleiteranordnung integriert und eine Schmelzsicherung F1 untergebracht sind, und mit einer auf einen Heizkreis 3 einwirkenden Ansteuerschaltung 2, mit der ein durch den Heizkreis 3 mit der Heizleiteranordnung 1.1 fließender Heizstrom iH zum Einregeln einer gewünschten Temperatur variierbar ist. Zur elektromagnetischen Feldreduzierung können dabei die Heizleiter mit in einer Richtung bezüglich des Stroms angeordneten Innenleiter und in entgegen gesetzter Richtung angeordnetem Außenleiter verbunden sein, wie an sich bekannt.

Der an eine Versorgungsspannung UV, beispielsweise eine Netzspannung oder eine andere transformierte Spannung oder Gleichspannung, angeschlossene und mittels Schalter S1, S2 von dieser trennbare Heizkreis 3 weist im Anschluss an die Heizleiteranordnung 1.1 und die Schmelzsicherung F1 in einem Steuerzweig 3.1 eine für eine positive Halbwelle in Durchlassrichtung angeschlossene Diode D01 oder alternativ einen Thyristor oder anderen Gleichrichter, ein Steuerglied THY1 in Form eines Thyristors oder Triacs oder anderen Halbleiterschalters oder elektronisch betätigbaren mechanischen Kontakts sowie einen Spannungsteilerwiderstand R21 auf, der mit seinem von dem Steuerglied THY1 abgelegenen Anschluss an Masse liegt und mit der Heizleiteranordnung 1.1 einen Spannungsteiler bildet. Die Heizleiter Rhz1, Rhz2 der Heizleiteranordnung 1.1 sind vorzugsweise mittels eines bei einer geeigneten Temperatur schmelzenden, einen negativen Temperaturwiderstandskoeffizienten (NTC-Effekt) besitzenden Isolators (INTC) voneinander isoliert und als Innenleiter und Außenleiter einer Heizkordel miteinander verbunden, wie an sich bekannt, wodurch auch eine Kompensation des elektromagnetischen Feldes erreicht wird. Die Heizleiteranordnung 1.1 ist an z.B. zwei Anschlusspunkten A, B im Randbereich des flexiblen Heizkörpers 1 oder an einem kurzen Kabelstück mit einer Stecker-/Kupplungseinheit in dem Heizkreis 3 lösbar angekoppelt oder aber über diese mit festen Anschlusskabeln verbunden. Die Schmelzsicherung F1 kann auch außerhalb des flexiblen Heizkörpers 1 in dem Heizkreis 3, beispielsweise in der Stecker-/Kupplungseinheit oder in einem Schnurzwischenschalter angeordnet sein. Die Heizleiter Rhz1, Rhz2 besitzen einen temperaturabhängigen Widerstand, beispielsweise mit einem positiven Temperaturkoeffizienten (PTC-Effekt) oder negativen Temperaturkoeffizienten (NTC-Effekt), so dass der zusammen mit dem Spannungsteilerwiderstand R21 gebildete Spannungsteiler temperaturabhängig ist. Mehrere Heizkreise 3 können parallel oder in Serie vorgesehen sein, wobei in dem Heizkörper 1 entsprechend mehrere Heizkordeln angeordnet sind.

Die Ansteuerschaltung 2 ist über einen Koppelzweig 5 zum Abgriff der mittels des Spannungsteilers aus dem Spannungsteilerwiderstand R21 und der Heizleiteranordnung 1.1 gebildeten Teilspannung sowie über einen Ansteuerzweig 9 an einen Steuereingang des Steuerglieds THY1 angeschlossen und weist eine über eine Energieversorgung 4 versorgte digitale Schaltungsanordnung 2.1, die beispielsweise als Mikrorechner, Mikrocontroller, spezielle integrierte Schaltungsanordnung (ASIC), CMOS-Gatter oder dgl. ausgebildet ist, sowie ferner ein in einem Ladezweig 7 und Sollwertzweig 6 eingebundenes Zeitglied aus einer Widerstand/Kondensatorschaltung R7, C6 und einen an der Versorgungsspannung UV liegenden weiteren Spannungsteiler 8 mit festen Widerständen R12, R15 und einem einstellbaren Widerstand P1 auf, wobei in dem positiven Poten/tialanschluss zu der Versorgungsspannung UV eine weitere Diode D2 in Durchlassrichtung eingefügt ist. Dabei ist die weitere Diode D2 so angeordnet, dass die gesamte Ansteuerschaltung 2 über diese an die Versorgungsspannung UV angeschlossen ist.

An dem weiteren Spannungsteiler 8 ist zwischen den beiden festen Widerständen R12, R15 zum Bilden des Sollwertzweiges 6 eine mit dem einstellbaren Widerstand in Form des Potentiometers P1 einstellbare Teilspannung abgegriffen, die entsprechend einer gewünschten Temperatur des Heizkörpers 1 wählbar ist. Das Potentiometer P1 liegt dabei zwischen dem masseseitigen festen Widerstand R15 und Masse Gnd. Die an dem weiteren Spannungsteiler 8 abgegriffene Teilspannung wird über einen an die digitale Schaltungsanordnung 2.1 zum Öffnen und Schließen an einen Anschluss Switch angeschlossenen steuerbaren Schalter S3 an den Kondensator C6 angelegt. Der Kondensator C6 ist damit mit seinem einen Anschluss über den Lade-Widerstand R7 zum Aufladen an den positiven Pol der Versorgungsspannung UV und mit seinem anderen Anschluss über den steuerbaren Schalter S3 und den festen Widerstand R15 und das Potentiometer P1 zum Bilden des Sollwertzweiges 6 an Masse angeschlossen, wobei der Sollwertzweig 6 zum Bilden eines Sollwerts zeitweilig mittels des steuerbaren Schalters S3 entsprechend einem in der digitalen Schaltungsanordnung 2.1 festgelegten Ansteueralgorithmus geschlossen werden kann. Der mit dem Lade-Widerstand R7 verbundene Anschluss des Kondensators C6 ist zum Erfassen einer Ladespannung zudem mit einem Eingangsanschluss der digitalen Schaltungsanordnung 2.1 zum Erfassen der Ladespannung und Zuführen zu einer Digitalisierstufe 2.11 verbunden, während der andere Anschluss des Kondensators C6 vorzugsweise an einen Entladeanschluss (Discharge) der digitalen Schaltungsanordnung 2.1 angeschlossen ist, um eine gesteuerte vollständige Entladung des Kondensators C6 vorzunehmen. Zudem ist dieser andere Anschluss des Kondensators C6 über den Koppelzweig 5 mit einem Widerstand R14 zum Abgreifen der Teilspannung an dem Widerstand R21 des Heizkreises 3, d.h. einer aktuellen Messgröße in Abhängigkeit der Temperatur der Heizleiteranordnung 1.1 und damit des Heizkörpers 1 angeschlossen, wobei der Anschlusspunkt in dem Heizkreis 3 zwischen dem Steuerglied THY1 und dem Spannungsteilerwiderstand R21 liegt. Der Ansteuerzweig 9 enthält einen Widerstand R11 und ist an einen Steueranschluss Trig1 der digitalen Schaltungsanordnung 2.1 angeschlossen, um eine Temperaturregelung des Heizkörpers 1 in Abhängigkeit von einem Sollwert-/Istwertvergleich vorzunehmen, wobei mittels der digitalen Schaltungsanordnung 2.1 geeignete Regelalgorithmen vorgegeben bzw. programmiert werden können.

Alternativ kann der Entladeanschluss Discharge auch entfallen. Anstelle Teilspannungen über die Widerstände R7 und R12 zu erzeugen, können auch entsprechende vom Lastkreis (Heizung) getrennte Gleichspannungen angelegt werden, so dass die Widerstände R7 und R12 eingespart werden. Weiterhin können verschiedene Sollwerte auch in der digitalen Schaltungsanordnung vorgegeben und über zugeordnete Anschlüsse abgegriffen werden, die mittels Umschalter geeignet kontaktiert werden können. Dadurch lassen sich die Widerstände R12, R15, P1 und der Schalter S3 ersetzen. Die Vorgabe des Sollwertes erfolgt dann nicht über den veränderten Widerstand P1, sondern mittels Umschalter. Beispielsweise kann dafür ein temperaturstabilsierter Zeittakt oder eine Referenzzeit in der digitalen Schaltungsanordnung 2.1 vorgesehen werden.

Die digitale Schaltungsanordnung 2.1 ist andererseits über einen Anschluss Vcc an die Energieversorgung 4 und mittels eines Masseanschlusses Gnd an Massepotential gelegt. Zudem bestehen über einen Synchronisieranschluss Sync, einen Anzeigeanschluss Anz sowie einen Rücksetzanschluss Reset weitere Verbindungen der digitalen Schaltungsanordnung 2.1 mit der Energieversorgung 4, wobei an dem Synchronisieranschluss Sync ein Widerstand R2 und an den Anzeigeanschluss Anz eine Anzeige, beispielhaft in Form einer Leuchtdiodenanzeige LED sowie eine Widerstandsanordnung R3 angeschlossen sind. Die Energieversorgung 4 ihrerseits liegt einerseits an Masse und andererseits über einen Widerstand R1 und die weitere Diode D2 an der Versorgungsspannung UV.

Parallel zu dem Steuerzweig 3.1 ist in dem Heizkreis 3 zwischen der Schmelzsicherung F1 und der Diode D01 ein Parallelzweig 3.2 mit einer Diodenanordnung aus zwei zueinander parallel liegenden Parallelzweig-Dioden D3, D4 angeschlossen, die über eine Widerstandsanordnung aus zwei parallelen Widerständen R22, R23 gegen Masse Gnd geführt sind. An dem Masseanschlusspunkt ist eine in thermischer Wirkverbindung mit den beiden Widerständen R22, R23 stehende Temperatursicherung TSi1 angeschlossen und über den Schalter S2 an einen Pol der Versorgungsspannung UV gelegt, so dass die bei starker Erwärmung der Widerstände R22, R23 bei Übertemperatur des Heizkörpers 1 ansprechende Temperatursicherung TSi1 den Versorgungsstrom unterbricht.

Zwischen dem Innenleiter Rhz1 und dem Außenleiter Rhz2 der Heizleiteranordnung 1.1 liegt in Reihe mit diesen eine Heizleiterdiode D5, die nur eine Halbwelle der Versorgungsspannung UV, vorliegend die positive Halbwelle, durchlässt und entsprechend mit ihrer Anode dem positiven Pol und mit ihrer Kathode dem negativen Pol der Versorgungsspannung UV zugekehrt und wie die in dem Steuerzweig 3.1 liegende Steuerzweigdiode D01 gepolt ist. Die Parallelzweig-Dioden D3, D4 sind hingegen entgegen der Durchlassrichtung der Heizleiterdiode D5 angeordnet, so dass sie den im Normalfall fließenden Heizstrom nicht durchlassen, sondern nur bei einer Überbrückung der Heizleiterdiode D5 eine dann auftretende negative Halbwelle durchlassen. Die negative Halbwelle ist dabei mehr oder weniger groß, je nachdem ob es sich um einen Kurzschluss zwischen dem Innenleiter Rhz1 und dem Außenleiter Rhz2 oder um eine mehr oder weniger hohe Erwärmung der Isolation INTC an einer bestimmten Stelle handelt, und hängt auch davon ab, ob die Stelle der Übertemperatur oder des Kurzschlusses mehr oder weniger weit von den Anschlussstellen A und B der Heizleiteranordnung 1.1 entfernt sind.

Der bei einer negativen Halbwelle infolge der Widerstände R22 und R23 sich ergebende Spannungsabfall wird zwischen der Diodenanordnung D3, D4 und der Widerstandsanordnung R22, R23 mittels eines Überwachugnszweigs 20 abgegriffen und mittels eines Überwachungszweig-Spannungsteilers mit Widerständen R9, R6 der digitalen Schaltungsanordnung 2.1 über einen Eingangsanschluss ENTC zur Auswertung zugeführt, wobei der Abgriff zwischen den beiden Widerständen R9, R6 erfolgt und der andere Anschluss des Widerstandes R6 an eine Bezugsspannung, beispielsweise die Versorgungsspannung Vcc der digitalen Schaltungsanordnung 2.1 angeschlossen ist.

Ferner ist die Ansteuerschaltung 2 mit einer Gehäusetemperaturüberwachung 30 versehen, die über weitere Anschlüsse C1, N1, N2 an die digitale Schaltungsanordnung 2.1 angeschlossen ist, wobei die drei Anschlusszweige parallel zueinander liegen und über einen gemeinsamen Anschlusspunkt an einen weiteren Kondensator C3 angeschlossen sind, der mit seinem anderen Anschluss an Masse liegt. Der Anschluss C1 liegt dabei direkt an dem Anschlusspunkt, während der Anschluss N1 über einen Widerstand R5 und der Anschluss N2 über einen Gehäuse-Temperatursensor Sens1, der z.B. auf dem PTC-Effekt oder NTC-Effekt basiert, an den Anschlusspunkt gelegt sind.

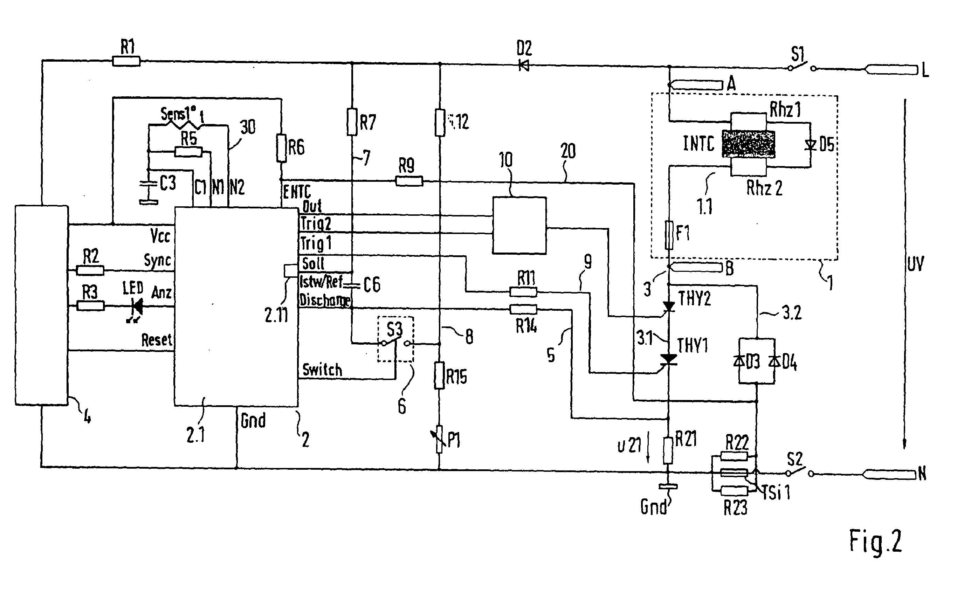

Die in Fig. 2 gezeigte Schaltungsanordnung entspricht bis auf ein zusätzliches Sicherheitssystem mit einer Sicherheitsschaltung 10 der Ausführung nach Fig. 1. Die Sicherheitsschaltung 10, z.B. in Form einer Transistorschaltung, ist mit zwei Anschlüssen an zwei Ausgangsanschlüsse der digitalen Schaltungsanordnung 2.1 angeschlossen, an denen vorzugsweise zueinander komplementäre Signalzustände zur Überwachung der Ansteuerschaltung 2 vorliegen. Andererseits ist die Sicherheitsschaltung 10 mit einem in dem Steuerzweig 3.1 des Heizkreises 3 anstelle der Diode D01 liegenden zusätzlichen Steuerglied THY2, das ebenfalls als Thyristor, Triac, anderer Halbleiterschalter oder elektromechanisch betätigter Schalter ausgeführt sein kann, angeschlossen, um den Heizkreis bei Auftreten eines Fehlers in der Ansteuerschaltung 2 abzuschalten.

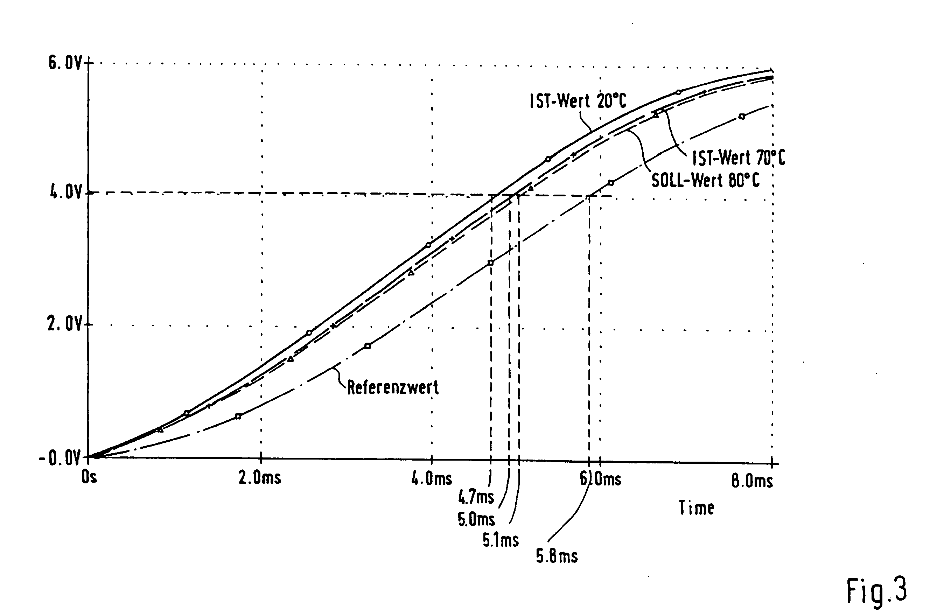

Im Folgenden werden die Funktionsweise der Temperaturregelung und anschließend die Temperaturüberwachung anhand der in den Fig. 1 und 2 gezeigten Heizvorrichtungen und von in Fig. 3 gezeigten Ladekurven des Kondensators C6 näher erläutert, aus denen ein Referenzwert, der Istwert bei verschiedenen Temperaturen der Heizleiteranordnung 1.1 und der Sollwert hergeleitet werden. Der Referenzwert, der Sollwert und der Istwert werden jeweils aus den Ladekurven des Kondensators C6 bei unterschiedlichen Beschaltungen bestimmt, die mittels der digitalen Schaltungsanordnung 2.1 gesteuert werden, wobei die Ladezeiten des Kondensators C6 auf eine bestimmte Ladespannung mittels einer in der digitalen Schaltungsanordnung 2.1 vorgesehenen Digitalisierstufe 2.11 bestimmt werden. In der digitalen Schaltungsanordnung 2.1 ist ein digitales Zeitmessglied mit einem festen Zeittakt und einem Zähler vorgesehen. Durch den Vergleich des Istwertes in Form eines Istzeitwertes und des Sollwertes in Form eines Sollzeitwertes wird über die Zuführung des Heizstromes iH mittels des Steuergliedes THY1, d.h. über Heizen oder Nichtheizen entschieden.

Für die Ermittlung des Referenzwertes wird vorliegend beispielsweise während einer negativen Halbwelle der Versorgungsspannung UV, die beispielsweise die Netzspannung ist, der Kondensator C6 über die Anschlüsse Istw/Ref und Discharge vollständig entladen. Während der Referenzmessung sind der steuerbare Schalter S3 und der Lastschalter in Form des Steuerglieds THY1 nicht angesteuert, d.h. offen. Über den Synchronisieranschluss Sync wird ein Nullspannungsdurchgang jeder positiven Halbwelle erfasst und nach dem Nulldurchgang beginnt der Aufladevorgang des Kondensators C6 in Abhängigkeit von den Widerständen R7, R14, R21 und der weiteren Diode D2, bis ein digitaler Schaltpegel an dem Referenzeingang der digitalen Schaltungsanordnung 2.1 erreicht ist. Bei 50 Hz Netzfrequenz beträgt die Ladezeit nach Fig. 2 z.B. 5,8 ms, die den Referenzwert bildet.

Zum Bilden des Istwertes wird der gesteuerte Schalter S3 nicht angesteuert, bleibt also offen, wogegen das Steuerglied THY1 angesteuert, d.h. der Heizkreis 3 geschlossen ist. Bedingt durch den Stromfluss über die von den Heizleitern gebildeten Heizwiderstände Rhz1 und Rhz2, die Schmelzsicherung F1, die Diode DO1, das Steuerglied THY1 und den Spannungsteilerwiderstand R21 entsteht ein temperaturproportionaler Spannungsabfall U21 an dem Spannungsteilerwiderstand R21. Beispielsweise beträgt die Teilspannung in Form des Spannungsabfalls U21 bei 20° C Heizleitertemperatur ca. 1 V (Spitze der positiven Sinushalbwelle) und bei maximaler Temperatur (80° C) ca. 0,7 V. Bedingt durch den parallelen Anstieg der positiven Ladespannung an dem Ladewiderstand R7 und die Anhebung mittels der Teilspannung U21 verkürzt sich der Ladevorgang an dem Kondensator C6 bis zum Erreichen des Schaltpegels auf eine Ladezeit bzw. einen Istzeitwert von ca. 4,7 ms bei 20° C. Ändert sich durch die Erwärmung der Heizleiteranordnung 1.1 auf 70° C infolge des PTC-Effektes die Teilspannung U21 auf ca. 0,75 V im Maximum der Sinushalbwelle, so erfolgt der Ladevorgang des Kondensators C6 in ca. 5,0 ms.

Zur Bildung des Sollwertes in Form des Sollzeitwertes wird bei nicht angesteuertem Steuerglied, d.h. bei offenem Heizkreis 3 und eingeschaltetem, d.h. geschlossenem steuerbaren Schalter S3 die Ladespannung des Kondensators C6 bei maximaler Temperatureinstellung (80° C) durch das Potentiometer P1 um ca. 0,7 V (Maximum der positiven Sinushalbwelle) angehoben. Dies entspricht der Teilspannung U21 bei maximaler Temperatur. Das ergibt an dem Kondensator C6 eine Ladezeit bis zum Schaltpegel von 5,1 ms (Sollzeitwert bei 80° C). Der Sollwertzweig 6 ergibt sich dabei durch die Bauteile weitere Diode D2, Widerstand R7, Kondensator C6, steuerbarer Schalter S3, Widerstand R15 und einstellbarer Widerstand P1 in Verbindung mit dem Widerstand R12 des weiteren Spannungsteilers 8, wobei der steuerbare Schalter S3 mittels der digitalen Schaltungsanordnung 2.1 über den Anschluss Switch angesteuert ist.

Beim Ablauf der Temperaturregelung wird zunächst der Referenzwert ermittelt, danach werden der Sollwert und der Istwert als Sollzeitwert und Istzeitwert bestimmt. Durch den Vergleich der Ladezeiten an dem Kondensator C6, der aufgrund der hergeleiteten digitalen Daten des Istzeitwertes und des Sollzeitwertes durchgeführt wird, wird dann über Heizen oder Nichtheizen entschieden. Bei Erreichen der Maximaltemperatur ergeben sich gleiche Ladezeiten an dem Kondensator C6 (wobei die Teilspannung U21 0,7 V beträgt), d.h. vorliegend 5,1 ms. Daraufhin wird die Ansteuerung des Steuergliedes THY1 unterbrochen und eine Pausenzeit von ca. 1 s eingefügt. Danach werden jeweils der Referenz-, Soll- und Istwert innerhalb von 3 Netzhalbwellen ermittelt. Durch einen weiteren Vergleich wird wieder über Heizen oder Nichtheizen entschieden. Bei Nichtheizen wird wiederum eine Pause von 1 s eingefügt. Dieser Ablauf wiederholt sich.

Im Einzelnen kann der Vergleich von Sollwert und Istwert in der digitalen Schaltungsanordnung 2.1 auch anderen Regelalgorithmen zugeführt werden, um den Heizstrom iH in dem Heizkreis 3 über das Steuerglied THY1 in Abhängigkeit von einem gewünschten zeitlichen Temperaturverhalten und/oder in Abhängigkeit von der Art des flexiblen Heizkörpers 1, beispielsweise einer Wärmedecke, einem Heizkissen oder Wärmeunterbett durchzuführen. Mit einem Mikrorechner oder Mikrocontroller kann ein geeigneter Regelalgorithmus leicht programmiert werden, wobei insbesondere auch Sicherheitsbestimmungen Rechnung getragen werden kann.

Eine Möglichkeit der Temperaturregelung besteht darin, eine Sollwertüberhöhung und eine geführte Sollwertreduzierung auf einen Nennwert zu verwirklichen. Bedingt durch die thermische Verzögerung des Anstiegs der Oberflächentemperatur des Heizkörpers 1 auf die Heizleitertemperatur infolge schlechter Wärmeleitung der Materialien des flexiblen Heizkörpers 1 ist es z.B. wünschenswert, den Temperaturanstieg zu verbessern. Eine Lösung hierzu bietet die Festlegung einer nach dem Einschalten der Heizvorrichtung zeitbedingten Erhöhung einer Sollwert-Temperatur. Um bei einem bereits vorgewärmten Heizkörper eine Überhöhung der Oberflächentemperatur zu erreichen, wird der Sollwert für die Regelung durch ein optimiertes Verfahren vorgegeben. Dies kann durch die Ermittlung der Differenz zwischen Sollwert und Istwert und einem davon abhängigen errechneten zeitweiligen Nachheizen nach Erreichen der Sollwert-Temperatur führen. Alternativ kann auch ein errechneter höherer Sollwert für die Regelung z.B. aus einem Soll- und Istwert-Temperaturvergleich festgesetzt werden. Ist also die Sollwert-/Istwert-Differenz beim Einschalten groß, so wird eine große Sollwertüberhöhung festgelegt. Die Überhöhung wird dann z.B. solange konstant oder verändert beibehalten, bis der Istwert mit dem überhöhten Sollwert übereinstimmt. Danach beginnt dann eine aus der Sollwertüberhöhung abgeleitete Temperaturabstufung. Auf diese Weise ergibt sich der Vorteil, dass die Oberflächentemperatur keinen Einbruch zeigt. Ist hingegen die Sollwert-/Istwert-Differenz beim Einschalten gleich wie bei einem laufenden Betrieb, so werden keine Sollwertüberhöhung und keine geführte Sollwertreduzierung auf Nennwert durchgeführt. Entsprechende Parameter für die Beurteilung der Sollwert-/Istwert-Differenz können in der digitalen Schaltungsanordnung 2.1 gespeichert werden. Je nach Art des flexiblen Heizkörpers 1, z.B. Heizkissen, Wärmeunterbetten oder Wärmedecken, kann dabei auch eine unterschiedliche Berechnungsmethode für die Sollwertüberhöhung vorgesehen werden. Dies kann z.B. durch Auswertung einer gespeicherten Software oder mittels programmierter Digitaleingänge oder aber durch zeitgesteuerte Zuschaltung oder Umschaltung auf eine andere Sollwertstufe realisiert werden.

Die bereits beschriebene Referenzmessung kann vorteilhaft zur Erkennung von Fehlern genutzt werden. Dazu kann der gemessene Referenzwert der Ladezeit mit dem Sollwert und/oder dem Istwert verglichen werden und anhand des Vergleichsergebnisses aufgrund vorbekannter bzw. gespeicherter oder eingegebener Werte ein Fehler der Elektronik, z.B. Kurzschluss in dem Steuerglied THY1 oder im Zusammenhang mit dem steuerbaren Schalter S3 erkannt werden. Aufgrund von Plausibilitätsvergleichen können die Fehler genau lokalisiert und zur Anzeige gebracht werden. Die Anzeige kann von einer einfachen Leuchtanzeige bis zu einer variablen Displayanzeige ausgelegt werden, wobei die Ansteuerung mittels der digitalen Schaltungsanordnung 2.1 unterschiedlich, z.B. als blinkende Warnanzeige oder auch akustisch ausgebildet sein kann.

Die Abschaltung der Heizvorrichtung kann mittels einfacher oder mehrfacher Zeitschaltung erfolgen, wobei Abschaltzeiten fest oder separat schaltbar integriert sein können. Bei längerem Betrieb kann eine Temperaturabsenkung durch entsprechende Programmierung der digitalen Schaltungsanordnung 2.1 vorgesehen sein, um Hautverbrennungen durch dauernd hohe Oberflächentemperaturen des Heizkörpers zu vermeiden. Hierzu kann ab einer bestimmten Sollwert-Temperatur eine zeitabhängige Sollwertabstufung oder sogar Abschaltung der Heizung vorgesehen sein.

Die in den Fig. 1 und 2 gezeigte Temperatur-Überwachungseinrichtung mit der einen negativen Widerstandstemperaturgang (NTC-Effekt) aufweisenden Isolation INTC und mit dem Parallelzweig 3.2 mit der Diodenanordnung D3, D4 und der Widerstandsanordnung R22, R23 sowie mit dem Überwachungszweig und der Bewertungseinheit in der digitalen Schaltungsanordnung 2.1 ist so ausgelegt, dass beispielsweise bei einer Erwärmung an einer Stelle (Hot Spot) der Isolation ab z.B. 80° C oder 90° C infolge Überbrückens der Heizleiterdiode D5 eine deutliche negative Halbwelle des Stroms über den ersten Heizleiter Rhz1, die Isolation INTC, den zweiten Heizleiter Rhz2, die Schmelzsicherung F1, die Parallelzweig-Dioden D3, D4 und die Widerstandsanordnung R22, R23 nach Masse Gnd fließt. An den Widerständen R22 und R23 ergibt sich dadurch eine temperaturabhängige negative Spannung, die bei noch höheren Temperaturen noch weiter (in die negative Richtung) ansteigt. Der Überwachungszweig-Spannungsteiler aus den Widerständen R6, R9 ist so dimensioniert, dass erst bei einer negativen Spannung, die einer bestimmten Temperatur, etwa zwischen 80° C und 100° C, z.B. 80° C oder 90° C, an dem Heizleiter entspricht, an dem Eingangsanschluss ENTC der digitalen Schaltungsanordnung 2.1 das digitale Eingangssignal von dem Eins-Pegel auf den Null-Pegel geschaltet wird. Solange dann der Null-Pegel anliegt wird der Heizstrom iH über das Steuerglied THY1 unterbrochen und die Heizung abgeschaltet. Das Ansprechen des Eingangssignals kann über eine optische oder akustische oder vibrierende Anzeige dem Benutzer übermittelt werden, um das Vorliegen eines Fehlers zu signalisieren.

Wird z.B. bei unsachgemäßem Gebrauch der Heizkörper 1 und damit die Heizleiteranordnung 1.1 scharf geknickt oder mechanisch zerstört, ergibt sich ein Kurzschluss zwischen dem ersten Heizleiter Rhz1 und dem zweiten Heizleiter Rhz2, so dass durch den überhöhten Strom in der negativen Halbwelle durch die Erwärmung der Widerstandsanordnung R22, R23 die Temperatursicherung TSi1 anspricht und den Strom von der Versorgung vollständig unterbricht. Die redundante Ausführung der Diodenanordnung mit zwei Parallelkreis-Dioden D3, D4 und der Widerstandsanordnung mit zwei Widerständen R22, R23 dient dabei der zusätzlichen Sicherheit. Bei der positiven Halbwelle fließt der dem Heizstrom bildende Strom hingegen über den Steuerzweig 3.1 mit der Steuerzweig-Diode DO1 (Fig. 1) bzw. dem zusätzlichen Steuerglied THY2 (Fig. 2) und dem Steuerglied THY1.

Die Gehäusetemperaturüberwachung 30 dient zum Übertemperaturschutz eines Schnurzwischenschalters, in dem die Ansteuerschaltung 2 (zumindest teilweise) angeordnet ist. In dem Gehäuse des Schnurzwischenschalters können infolge von Verlustleistung hohe Temperaturen entstehen, die zum Zerstören und Ausfall von elektrischen Baugruppen führen können. Dieses Problem erhöht sich mit zunehmender Miniaturisierung von Geräteschaltern. Zudem besteht gerade bei flexiblen, schmiegsamen Heizkörpern, wie Heizdecken oder Wärmeunterbetten die Gefahr, dass die Schalter abgedeckt oder unter die Heizkörper gesteckt sind. Die Gefahr einer unzulässigen Temperaturüberhöhung im Gehäuseinnern wird mittels der Gehäusetemperaturüberwachung 30 unterbunden. Bei Überschreitung eines Grenzwerts wird der Heizstrom von der Ansteuerschaltung 2 mittels des Steuerglieds THY1 oder THY2 abgeschaltet, bei Unterschreiten des Grenzwerts wird die Temperaturregelung mittels der Ansteuerschaltung 2 wieder eingeschaltet.

Dabei wird mittels der digitalen Schaltungsanordnung 2.1 der weitere Kondensator C3 entladen. Daraufhin wird die Ladezeit des weiteren Kondensators C3 über den Bezugswiderstand R5, mit dem der Grenzwert der maximal zulässigen Temperatur angegeben wird, ermittelt. Anschließend wird der weitere Kondensator C3 wieder entladen. Der Temperatursensor Sens1, der z.B. einen NTC-Widerstand oder PTC-Widerstand aufweist und den aktuellen Temperaturwert angibt, dient dann zum Bilden einer entsprechenden Ladezeit des Kondensators C3 und zum Ermitteln derselben mittels der digitalen Spaltungsanordnung 2.1. Die Temperaturüberschreitung kann dann mittels der Bewertungseinheit der digitalen Schaltungsanordnung 2.1 vorgenommen werden, um den Heizkreis entsprechend anzusteuern. Der Anschluss C1 der digitalen Schaltungsanordnung 2.1 dient dabei als Messeingang und Entladeausgang für den weiteren Kondensator C3, der Anschluss N1 als hochohmiger Eingang und Logikausgang für den Bezugswiderstand R5 und der Anschluss N2 als hochohmiger Eingang und Logikausgang für den Temperatursensor Sens1. Die Über- oder Unterschreitung der Gehäuseinnentemperatur kann optisch oder akustisch z.B. mit Warnton und/oder Blinklicht (Flashlicht) angezeigt werden.

Mittels der Anzeigevorrichtung, vorliegend beispielsweise als Anzeigeeinheit LED angegeben, können die verschiedenen Betriebszustände der Heizvorrichtungen, z.B. Sollwertreduzierung, Zeitabschaltung oder dgl. einem Benutzer auf vielfältige Weise, z.B. mittels Farbe, Ziffern, Symbolen, Texten oder dgl. angezeigt werden. Dabei können Blinkbetrieb, wechselnde Farben, Flash-Anzeige oder ähnliches vorgesehen sein und auch eine Ton-, Sprach- oder Vibrationsanzeige realisiert werden. Ein Vibrationsalarm kann beispielsweise im Heizkörper oder einem Schnurschalter bis zum Absenken der Sollwert-Temperatur vorgesehen sein, um z.B. durch wiederkehrenden Betrieb ein Einschlafen des Benutzers während kritischer Phasen zu vermeiden. Die Anzeigevorrichtung kann dabei so ausgebildet sein, dass sie separat auf das mittels der Isolation INTC gewonnene Überwachungssignal anspricht.

## Patentansprüche

1. Heizvorrichtung mit einer in einem flexiblen Heizkörper (1) integrierten und über ein Anschlusskabel an eine Versorgungsspannung (UV) anschließbaren elektrischen Heizleiteranordnung (1.1), die einen ersten Leiter (Rhz1) und einen mit diesem in Reihe liegenden und von ihm mit einer Isolation (INTC) getrennten, benachbarten zweiten Leiter (Rhz2) aufweist, einem mit dieser und weiteren Elementen einschließlich einem Steuerglied (THY1) für einen Heizstrom (iH) gebildeten Heizkreis (3) und mit einer zum Beeinflussen des Heizstroms (iH) und Regeln der Temperatur an das Steuerglied (3) angeschlossenen Ansteuerschaltung (2), wobei in dem Heizkreis (3) ein das Steuerglied (THY1) aufweisender Steuerzweig (3.1) und ein dazu parallel liegender Parallelzweig (3.2) gebildet sind und die Isolation (INTC) eine mit der Temperatur abnehmende Widerstandscharakteristik besitzt,
**dadurch gekennzeichnet,**
**dass** die Ansteuerschaltung (2) des Weiteren zum Abgreifen eines von der Temperatur der Isolation (INTC) abhängigen elektrischen Überwachungssignal-Stroms oder einer Überwachungssignal-Spannung über einen Überwachungszweig (20) an den auf eine Widerstandsveränderung der Isolation (INTC) ansprechenden Parallelzweig (3.2) des Heizkreises (3) gekoppelt ist, und
**dass** die Ansteuerschaltung (2) auf eine Überschreitung einer Schwelle durch das Überwachungssignal anspricht und den Heizstrom (iH) durch Ansteuern des Steuerglieds (THY1) unterbricht.

2. Heizvorrichtung nach Anspruch 1,
**dadurch gekennzeichnet,**
**dass** mittels der Isolation (INTC) und einer Widerstandsanordnung (R22, R23) ein durch eine Parallelzweig-Diodenanordnung (D3, D4) nur bei einer Halbwelle einer Versorgungsspannung (UV) ansprechender temperaturabhängiger Spannungsteiler gebildet ist, an dem das Überwachungssignal abgegriffen ist, welches über den Überwachungszweig (20) einer Bewertungseinheit der Ansteuerschaltung (2) zugeführt ist.

3. Heizvorrichtung nach Anspruch 2,
**dadurch gekennzeichnet,**
**dass** zwischen dem als Innenleiter (Rhz1) ausgebildeten ersten Leiter und dem als Außenleiter (Rhz2) ausgebildeten zweiten Leiter in Reihe zu diesen eine Heizleiterdiode (D5) oder anderer Gleichrichter angeordnet ist,
**dass** der Parallelzweig die in Reihe mit der Widerstandsanordnung (R22, R23) liegende Parallelzweig-Diodenanordnung mit mindestens einer in Gegenrichtung zu der Durchlassrichtung der Heizleiterdiode (D5) angeordneten Parallelzweigdiode (D3, D4) aufweist, und
**dass** der Steuerzweig (3.1) mindestens ein in Durchlassrichtung der Heizleiterdiode (D5) oder des anderen Gleichrichters geschaltetes Bauelement (DO1, THY1, THY2) aufweist.

4. Heizvorrichtung nach Anspruch 2 oder 3,
**dadurch gekennzeichnet,**
**dass** zwei Parallelzweigdioden (D3, D4) zueinander parallel geschaltet sind und die Widerstandsanordnung zwei zueinander parallel geschaltete, gegen Masse (Gnd) geführte Parallelzweig-Widerstände (R22, R23) umfasst.

5. Heizvorrichtung nach Anspruch 3 oder 4,
**dadurch gekennzeichnet,**
**dass** in thermischer Wirkverbindung mit der Widerstandsanordnung (R22, R23) eine Temperatursicherung (TSi1) vorgesehen ist.

6. Heizvorrichtung nach einem der vorhergehenden Ansprüche,
**dadurch gekennzeichnet,**
**dass** das Überwachungssignal über den Überwachungszweig (20) an einen Eingang (ENTC) einer digitalen Schaltungsanordnung (2.1) der Ansteuerschaltung (2) gelegt ist, die die Bewertungseinheit aufweist.

7. Heizvorrichtung nach Anspruch 6,
**dadurch gekennzeichnet,**
**dass** das Überwachungssignal mittels eines in dem Überwachungszweig (20) angeordneten weiteren Spannungsteilers mit Überwachungszweig-Widerständen (R9, R6) an den Eingang (ENTC) gelegt ist.

8. Heizvorrichtung nach einem der vorhergehenden Ansprüchen,
**dadurch gekennzeichnet,**
**dass** die Ansteuerschaltung (2) des Weiteren zum Abgreifen einer von der Temperatur der Isolation (INTC) abhängigen elektrischen Messgröße - Strom oder Spannung - über einen Koppelzweig (5) an den Heizkreis (3) gekoppelt ist und
**dass** die Ansteuerschaltung (2) derart ausgebildet ist, dass die Ansteuerung des Steuerglieds (THY1) zum Einregeln einer eingestellten Temperatur des Heizkörpers (1) ausgebildet ist.

9. Heizvorrichtung nach Anspruch 8,
**dadurch gekennzeichnet,**
**dass** die Messgröße (U21) mittels eines im Heizkreis (3) gebildeten Spannungsteilers abgegriffen ist, der einerseits mit der einen temperaturabhängigen Widerstand bildenden Heizleiteranordnung (1.1) und andererseits mit mindestens einem Widerstandselement (R21) gebildet ist,
**dass** die Messgröße über dem Koppelzweig (5) einem einer Digitalstufe (2.11) vorgeschalteten analogen Zeitglied mit einer Widerstands-/Kondensatorschaltung (R7, C6) zugeführt ist,
**dass** die Digitalisierstufe (2.11) zum Bilden eines digitalen Istwertes ein Zeitmessglied aufweist und der digitale Istwert einem Istzeitwert bis zum Erreichen einer vorgegebenen oder vorgebbaren Ladespannung des Kondensators (C6) entspricht,
**dass** in der Digitalstufe (2.11) als Sollwert ein Sollzeitwert vorgegeben oder vorgebbar ist und
**dass** zum Heizen die Ansteuerung des Steuerglieds (THY2) in Abhängigkeit von einer Abweichung des Istzeitwertes von dem Sollzeitwert erfolgt.

10. Heizvorrichtung nach einem der vorhergehenden Ansprüche,
**dadurch gekennzeichnet,**
**dass** die Ansteuerschaltung (2) eine Sicherheitsschaltung (10) mit einer Fehlersensoreinrichtung aufweist und
**dass** in dem Heizkreis (3) ein über die Sicherheitsschaltung (10) ansteuerbares zusätzliches Steuerglied (THY2) in Reihe zu dem Steuerglied (THY1) angeordnet ist, wobei die Sicherheitsschaltung auf einen Fehler der Ansteuerschaltung (2) anspricht und den Heizstrom (iH) durch Ansteuerung des zusätzlichen Steuerglieds (THY2) unterbricht.

11. Heizvorrichtung nach einem der vorhergehenden Ansprüche,
**dadurch gekennzeichnet,**
**dass** in dem Heizkreis (3) auf dem Heizkörper (1) oder außerhalb desselben eine Schmelzsicherung (F1) angeordnet ist.

12. Heizvorrichtung nach einem der vorhergehenden Ansprüche,
**dadurch gekennzeichnet,**
**dass** die Heizleiteranordnung (1.1) nur zwei aus dem Heizkörper (1) herausgeführte Heizleiterenden aufweist, die an Anschlusspunkten (A, B) mit einer zweiadrigen Anschlussleitung direkt über eine 2-polige Stecker/Kupplungseinheit oder eine Hot Lead-Verbindung verbunden ist.

13. Heizvorrichtung nach Anspruch 12,
**dadurch gekennzeichnet,**
**dass** die Anschlusspunkte (A, B) innerhalb eines Schnurzwischenschaltgehäuses liegen.

14. Heizvorrichtung nach einem der vorhergehenden Ansprüche,
**dadurch gekennzeichnet,**
**dass** eine auf das Überwachungssignal ansprechende, optische und/oder akustische Anzeigeeinheit vorgesehen ist.

## Claims

1. Heating apparatus having an electrical heating conductor arrangement (1.1), which is integrated in a flexible heating body (1), can be connected via a connecting cable to a supply voltage (UV) and has a first conductor (Rhz1) and an adjacent second conductor (Rhz2) which is connected in series with the former and is isolated from it by insulation (INTC), having a heating circuit (3), which is formed therewith and with further elements including a control element (THY1) for a heating current (iH), and having a drive circuit (2) which is connected to the control element (3) in order to influence the heating current (iH) and to control the temperature, with a control branch (3.1) which has the control element (THY1) and a parallel branch (3.2), in parallel therewith, being formed in the heating circuit (3), and with the insulation (INTC) having a resistance characteristic which decreases with the temperature, **characterized in that** the drive circuit (2) is furthermore coupled to the parallel branch (3.2), which responds to a resistance change of the insulation (INTC), of the heating circuit (3) in order to tap off an electrical monitoring signal current, which is dependent on the temperature of the insulation (INC), or a monitoring signal voltage via a monitoring branch (20), and
**in that** the drive circuit (2) responds to the monitoring signal overshooting a threshold, and interrupts the heating current (iH) by driving the control element (THY1).

2. Heating apparatus according to Claim 1, **characterized in that** a temperature-dependent voltage divider which, by means of a parallel branch diode arrangement (D3, D4) responds only in one half cycle of a supply voltage (UV), is formed by means of the insulation (INTC) and a resistance arrangement (R22, R23), on which voltage divider the monitoring signal is tapped off and is supplied via the monitoring branch (20) to an assessment unit of the drive circuit (2).

3. Heating apparatus according to Claim 2, **characterized in that** a heating conductor diode (D5) or another rectifier is arranged between the first conductor, which is in the form of the inner conductor (Rhz1), and the second conductor, which is in the form of the outer conductor (Rhz2), in series with them,
**in that** the parallel branch has the parallel branch diode arrangement, which is connected in series with the resistance arrangement (R22, R23), with at least one parallel branch diode (D3, D4) which is arranged in the opposite direction to the forward-biased direction of the heating conductor diode (D5), and
**in that** the control branch (3.1) has at least one component (DO1, THY1, THY2) which is connected in the forward-biased direction of the heating conductor diode (D5) or of the other rectifier.

4. Heating apparatus according to Claim 2 or 3,
**characterized in that** two parallel branch diodes (D3, D4) are connected in parallel with one another, and the resistance arrangement comprises two parallel branch resistances (R22, R23) which are connected parallel with one another and are connected to earth (Gnd).

5. Heating apparatus according to Claim 3 or 4,
**characterized in that** a temperature protection device (TSi1) is thermally operatively connected to the resistance arrangement (R22, R23).

6. Heating apparatus according to one of the preceding claims, **characterized in that** the monitoring signal is applied via the monitoring branch (20) to one input (ENTC) of a digital circuit arrangement (2.1) of the drive circuit (2), which has the assessment unit.

7. Heating apparatus according to Claim 6, **characterized in that** the monitoring signal is applied to the input (ENTC) by means of a further voltage divider, which is arranged in the monitoring branch (20) and has monitoring branch resistances (R9, R6).

8. Heating apparatus according to one of the preceding claims, **characterized in that** the drive circuit (2) is also coupled to the heating circuit (3) via a coupling branch (5) in order to tap off an electrical measurement variable - current or voltage - which is dependent on the temperature of the insulation (INTC),
and
**in that** the drive circuit (2) is designed such that the drive for the control element (THY1) is designed to regulate a. set temperature of the heating body (1).

9. Heating apparatus according to Claim 8, **characterized in that** the measurement variable (U21) is tapped off by means of a voltage divider which is formed in the heating circuit (3) and is formed on the one hand with the heating conductor arrangement (1.1) which forms a temperature-dependent resistance, and on the other hand with at least one resistance element (R21),
**in that** the measurement variable is supplied via the coupling branch (5) to an analogue timer, which is connected upstream of a digital stage (2.11) and has a resistance/capacitor circuit (R7, C6),
**in that** the digitizing stage (2.11) has a time measurement element in order to form a digital actual value, and the digital actual value corresponds to an actual time value for the capacitor (C6) to reach a charge voltage which is or can be predetermined,
**in that** a nominal time value is or can be predetermined as a nominal value in the digital stage (2.11), and
**in that**, for heating, the control element (THY2) is driven as a function of any discrepancy between the actual time value and the nominal time value.

10. Heating apparatus according to one of the preceding claims, **characterized in that** the drive circuit (2) has a safety circuit (10) with a fault sensor device, and
**in that** an additional control element (THY2), which can be driven via the safety circuit (10), is arranged in series with the control element (THY1) in the heating circuit (3), with the safety circuit responding to a fault in the drive circuit (2) and interrupting the heating current (iH) by driving the additional control element (THy2).

11. Heating apparatus according to one of the preceding claims, **characterized in that** a fuse link (F1) is arranged in the heating circuit (3), on the heating body (1) or outside it.

12. Heating apparatus according to one of the preceding claims, **characterized in that** the heating conductor arrangement (1.1) has only two heating conductor ends which are passed out of the heating body (1) and are connected directly to a two-wire connecting line at connecting points (A, B), via a two-pole plug/coupling unit or a hot lead connection.

13. Heating apparatus according to Claim 12, **characterized in that** the connecting points (A, B) are located within a flexible-cord intermediate switching housing.

14. Heating apparatus according to one of the preceding claims, **characterized in that** an optical and/or acoustic indicating unit which responds to the monitoring signal is provided.

## Revendications

1. Dispositif de chauffage comprenant un agencement de conducteurs chauffants électriques (1.1) intégré dans un corps chauffant flexible (1) et pouvant être raccordé par le biais d'un câble de raccordement à une tension d'alimentation (UV), qui présente un premier conducteur (Rhz1) et un deuxième conducteur adjacent (Rhz2) monté en série avec celui-ci, séparé de lui par une isolation (INTC), un circuit de chauffage (3) formé avec celui-ci et d'autres éléments y compris un organe de commande (THY1) pour un courant de chauffage (iH) et comprenant un circuit de commande (2) raccordé à l'organe de commande (THY1) pour influencer le courant de chauffage (iH) et réguler la température, une branche de commande (3.1) présentant l'organe de commande (THY1) et une branche parallèle à celle-ci (3.2) étant formées dans le circuit de commande (2) et l'isolation (INTC) possédant une caractéristique de résistance diminuant avec la température,
**caractérisé en ce que**
le circuit de commande (2) est accouplé en outre pour prélever un courant de signal de surveillance électrique dépendant de la température de l'isolation (INTC) ou une tension de signal de surveillance par le biais d'une branche de surveillance (20) au niveau de la branche parallèle (3.2) du circuit de chauffage (3) réagissant à une variation de résistance de l'isolation (INTC), et
**en ce que** le circuit de commande (2) réagit au dépassement d'un seuil par le signal de surveillance et coupe le courant de chauffage (iH) par commande de l'organe de commande (THY1).

2. Dispositif de chauffage selon la revendication 1,
**caractérisé en ce que**,
au moyen de l'isolation (INTC) et d'un agencement de résistances (R22, R23), un diviseur de tension dépendant de la température est formé par un agencement de diodes à branches parallèles (D3, D4) lequel réagit seulement dans le cas d'une demi-onde d'une tension d'alimentation (UV), un signal de surveillance étant prélevé du diviseur de tension, lequel est acheminé par le biais de la branche de surveillance (20) à une unité d'analyse du circuit de commande (2).

3. Dispositif de chauffage selon la revendication 2,
**caractérisé en ce que**,
entre le premier conducteur réalisé sous forme de conducteur interne (Rhz1) et le deuxième conducteur réalisé sous forme de conducteur externe (Rhz2), on dispose en série avec ceux-ci une diode de conducteur chauffant (D5) ou un autre redresseur,
**en ce que** la branche parallèle présente l'agencement de diodes à branches parallèles monté en série avec l'agencement de résistances (R22, R23) avec au moins une diode à branches parallèles (D3, D4) disposée dans le sens opposé au sens de passage de la diode de conducteur chauffant (D5), et
**en ce que** la branche de commande (3.1) présente au moins un composant (DO1, THY1, THY2) monté dans le sens de passage de la diode de conducteur chauffant (D5) ou de l'autre redresseur.

4. Dispositif de chauffage selon la revendication 2 ou 3,
**caractérisé en ce que**
deux diodes à branches parallèles (D3, D4) sont branchées en parallèle l'une avec l'autre et l'agencement de résistances comprend deux résistances à branches parallèles (R22, R23) guidées vers la masse (Gnd) et branchées en parallèle l'une avec l'autre.

5. Dispositif de chauffage selon la revendication 3 ou 4,
**caractérisé en ce que**
dans la liaison fonctionnelle thermique avec l'agencement de résistances (R22, R23), on prévoit un fusible thermique (TSi1).

6. Dispositif de chauffage selon l'une quelconque des revendications précédentes,
**caractérisé en ce que**
le signal de surveillance est appliqué sur la branche de surveillance (20) à une entrée (ENTC) d'un agencement de circuit numérique (2.1) du circuit de commande (2), qui présente l'unité d'analyse.

7. Dispositif de chauffage selon la revendication 6,
**caractérisé en ce que**
le signal de surveillance est appliqué à l'entrée (ENTC) par le biais d'un autre diviseur de tension disposé dans la branche de surveillance (20), avec des résistances de branche de surveillance (R9, R6).

8. Dispositif de chauffage selon l'une quelconque des revendications précédentes,
**caractérisé en ce que**
le circuit de commande (2) est en outre accouplé pour prélever une valeur de mesure électrique dépendant de la température de l'isolation (INTC) - qu'il s'agisse du courant ou de la tension - par le biais d'une branche de couplage (5) au circuit de chauffage (3) et
**en ce que** le circuit de commande (2) est réalisé de telle sorte que la commande de l'organe de commande (THY1) soit réalisée pour réguler une température ajustée du corps chauffant (1).

9. Dispositif de chauffage selon la revendication 8,
**caractérisé en ce que**
la valeur de mesure (U21) est prélevée au moyen d'un diviseur de tension formé dans le circuit de chauffage (3), qui est formé d'une part avec l'agencement de conducteurs chauffants (1.1) formant une résistance dépendant de la température et d'autre part avec au moins un élément de résistance (R21),
**en ce que** la valeur de mesure est acheminée par le biais de la branche de couplage (5) à un organe temporel analogue monté avant un étage numérique (2.11), avec un branchement résistance/condensateur (R7, C6),
**en ce que** l'étage de numérisation (2.11) présente un organe de mesure temporel pour former une valeur instantanée numérique et la valeur instantanée numérique correspond à une valeur temporelle instantanée jusqu'à l'obtention d'une tension de charge prédéfinie ou prédéfinissable du condensateur (C6),
**en ce que** dans un étage numérique (2.11), on prédéfinit ou on peut prédéfinir une valeur temporelle de consigne en tant que valeur de consigne et
**en ce que** pour le chauffage, la commande de l'organe de commande (THY2) a lieu en fonction d'un écart de la valeur temporelle instantanée par rapport à la valeur temporelle de consigne.

10. Dispositif de chauffage selon l'une quelconque des revendications précédentes,
**caractérisé en ce que**
le circuit de commande (2) présente un circuit de sécurité (10) avec un dispositif de capteur d'erreur et
**en ce que** dans le circuit de chauffage (3) est disposé un organe de commande (THY2) supplémentaire en série avec l'organe de commande (THY1), et pouvant être commandé par le biais du circuit de sécurité (10), le circuit de sécurité réagissant à une erreur du circuit de commande (2) et coupant le courant de chauffage (iH) par réaction de l'organe de commande supplémentaire (THY2).

11. Dispositif de chauffage selon l'une quelconque des revendications précédentes,
**caractérisé en ce que**
l'on dispose un fusible (F1) dans le circuit de chauffage (3) sur le corps chauffant (1) ou en dehors de celui-ci.

12. Dispositif de chauffage selon l'une quelconque des revendications précédentes,
**caractérisé en ce que**
l'agencement de conducteurs chauffants (1.1) présente seulement deux extrémités de conducteur chauffant sortant du corps chauffant (1), qui sont connectées au niveau de points de raccordement (A, B) à une conduite de raccordement à deux brins directement par le biais d'une unité de raccords/d'accouplement à deux pôles ou d'une connexion à point chaud (hot lead).

13. Dispositif de chauffage selon la revendication 12,
**caractérisé en ce que**
les points de raccordement (A, B) sont situés à l'intérieur d'un boîtier de circuit intermédiaire à cordon.

14. Dispositif de chauffage selon l'une quelconque des revendications précédentes,
**caractérisé en ce que**
l'on prévoit une unité d'affichage optique et/ou acoustique réagissant au signal de surveillance.
